# EUROPEAN PATENT APPLICATION

(11) **EP 4 040 008 A1**
(43) Date of publication of application: **10.08.2022**
(21) Application number: 21155319.3
(22) Date of filing: 04.02.2021
(51) Int. Cl.: F16F 7/116

(54) **VIBRATION DAMPING DEVICE**

(71) Applicant: Silencions sp. z o. o., 51-317 Wroclaw (PL)
(72) Inventor: KUBAN, Lukasz Robert, 42-200 Czestochowa (PL); MODRZYNSKI, Pawel Piotr, 55-095 Domaszczyn (PL); KRAS, Aleksander Stefan, 54-312 Wroclaw (PL)
(74) Representative: reuteler & cie SA

(57) **Abstract**

Vibration damping device (1) for damping acoustic and mechanical vibrations, comprising a support structure (2) and a resonator arrangement (3) coupled to the support structure (2), the resonator arrangement comprising a plurality of resonator elements (5), each including an elastic element (9, 9a, 9b) and an inertial oscillating mass (8) coupled to the elastic element. The resonator arrangement further comprises a frequency adjustment mechanism (10a, 10b, 10c) for each resonator element configured to adjust the resonant frequency of said each resonator element.

## Description

The present invention relates to a device for damping mechanical and acoustic vibrations.

Damping of acoustic vibrations is often performed by panels or other structures made of materials with high damping properties. Many damping materials do not meet the desirable characteristics such as non-flammability or are characterized by high mass such as concrete or large volumes such as mineral wools which limits their use and applications in many environments. Solutions based on sound absorbing materials are often not tuned specifically to the frequency emitted by the sound source and do not allow the exchange of gas between the sound source and the protected environment. Also, typical conventional solutions offering reduction of acoustic and mechanical vibrations do not achieve a desired level of vibration reduction particularly at low frequencies.

Some of the aforementioned drawbacks are overcome by structures that integrate resonating elements configured to absorb vibrations at certain frequencies. Such known solutions however are designed specifically for certain frequencies and thus are not adaptable to use for various applications, making them expensive to manufacture and implement for various industrial and domestic uses.

It is an object of this invention to provide a vibration damping device that has a high damping performance yet is light and compact as well as being easily adaptable for various applications.

It is advantageous to provide a vibration damping device that is cost effective to manufacture and implement.

It is advantageous to provide a vibration damping device for certain applications allowing exchange of gas between this vibration source and the environment protected from vibrations.

It is advantageous to provide a vibration damping device that may be made of various materials depending on the needs, for instance low weight, transparency, non-flammable and other desired characteristics depending on the application.

It is advantageous to provide a vibration damping device that can be easily configured in various forms and shapes to match the shapes of apparatuses on which they are mounted.

Objects of the invention have been achieved by providing a vibration damping device according to claim 1.

Disclosed herein, according to a first aspect of the invention, is a vibration damping device for damping acoustic and mechanical vibrations, comprising a support structure and a resonator arrangement coupled to the support structure, the resonator arrangement comprising a plurality of resonator elements, each including an elastic element and an inertial oscillating mass coupled to the elastic element. The resonator arrangement further comprises a frequency adjustment mechanism for each resonator element configured to adjust the resonant frequency of said each resonator element.

In an embodiment the elastic element comprises an elastic beam extending between a base end coupled to the support structure and the inertial oscillating mass.

In an embodiment the frequency adjustment mechanism comprises a beam length adjustment mechanism configured to adjust a resonating length of the elastic beam.

In an embodiment the beam length adjustment mechanism comprises an actuator such as a fork or arm adjustably engaging the elastic beam at a position situated between the base end and the inertial mass to adjust the length of the beam between the actuation element and the inertial mass.

In an embodiment the frequency adjustment mechanism comprises a cavity within which a base portion of the elastic beam is inserted to shorten the oscillating length of the free portion of elastic beam to the inertial mass.

In an embodiment the elastic beam is held in the cavity by a screw thread, a ratchet mechanism, an interference fit or a clamping mechanism.

In an embodiment the elastic beam is mounted at a base end to a wall and upstands therefrom to the inertial oscillating mass at a free end of the beam, the base wall surrounded by a peripheral wall upstanding therefrom in direction of the beam fillable with a resin or other potting material at an adjustable height configured to adjust the oscillating length of the elastic beam.

In an embodiment said plurality of resonator elements are arranged in a plurality of subsets comprising or more said resonator elements, each subset surrounded by one said peripheral wall fillable with said resin or other potting material.

In an embodiment the elastic beam comprises a spiral form.

In an embodiment the elastic beam is integrally formed with the surrounding support of the support structure and extends to a free end comprising the inertial oscillating mass, a gap being formed around the beam separating it from the surrounding support.

In an embodiment discrete bridging posts or thin web are connected across the gap along the length of the beam from the base end towards the inertial oscillating mass, the bridging posts or thin web being severable to adjust an oscillating length of the elastic beam, said oscillating length formed by a portion of the elastic beam free from bridging posts or thin web to the inertial oscillating mass.

In an embodiment the support structure, elastic beam and inertial oscillating mass are integrally formed in a molding or stamping process.

In an embodiment the support structure may advantageously be provided in the form of a substantially planar thin bendable film.

In an embodiment the elastic element comprises a gas filled capsule comprising an elastic membrane covering a gas filled chamber, the inertial oscillating mass mounted on the elastic membrane separated from the support structure to which the elastic membrane is hermetically fixed, the frequency adjustment mechanism comprising a gas inlet and outlet connected to a gas pressure source allowing a pressure in the chamber to be varied to adjust the resonant frequency of the elastic element.

In an embodiment the resonator arrangement comprises two or more sets of said resonator elements adjusted to at least two or more resonant frequencies.

Also disclosed herein, according to another aspect of the invention, is a construction element comprising a plurality of unitary vibration damping devices mounted within the construction element, each vibration damping device comprising a support structure in the form of a container and a resonator arrangement mounted inside the container. The resonator arrangement comprises at least one resonator comprising an elastic beam connected to an inner side of a wall of the container and extending to an inertial mass mounted on the elastic beam and elastically movable within the container at a resonance frequency of the resonator.

In an embodiment the resonator arrangement comprises a plurality of said resonators.

In an embodiment the inertial mass is mounted on a free end of the elastic beam.

In an embodiment there is at least one pair of resonators extending from opposite sides of the container.

In an embodiment the elastic beam is coupled to opposed sides of the container and the inertial mass is mounted on a mid section of the elastic beam.

In an embodiment the elastic beam is part of a rod on which a plurality of unitary vibration damping devices are mounted in a spaced apart manner on the rod.

In an embodiment the container completely encapsulates the resonator arrangement.

In an embodiment the unitary vibration damping devices are loosely mounted within a chamber or chambers of a the construction element.

In an embodiment, the construction element comprises panels between which the unitary vibration damping devices are mounted.

In an embodiment, the unitary vibration damping devices are mounted in cells within the construction element.

In an embodiment, the construction element comprises a substrate within which the unitary vibration damping devices are embedded.

In an embodiment the substrate is a binding construction material such as concrete, plaster, resin, and other materials for building construction elements.

In an embodiment, the rod is a rebar.

In an embodiment, the container, rod and inertial mass are made of metal.

Further objects and advantageous features of the invention will be apparent from the claims, from the detailed description, and annexed drawings, in which:
Figure 1a is a schematic perspective view of a vibration damping device according to a first embodiment of the mention;
Figure 1b is perspective view of an element of figure 1a;
Figure 1c is similar to figure 1a but showing resonators adjusted to different frequencies (beam lengths) whereas figure 1a shows all resonators adjusted to the same frequency (beam length);
Figure 2a is a schematic perspective view of a second embodiment of the invention;
Figure 2b is a perspective view of an element of figure 2a adjusted for a first frequency and Figure 2c is a view similar to figure 2b adjusted for a second frequency;
Figure 2c is similar to figure 2a but showing resonators adjusted to different frequencies (beam stiffnesses) whereas figure 2a shows all resonators adjusted to the same frequency (beam stiffness);
Figure 3a is a schematic perspective view of a vibration damping device according to a third embodiment of the invention;
Figure 3b is a perspective view of an element of figure 3a illustrating a displaceable mass in an exploded state;
Figures 3c and 3d are views of the element of figure 3b in first and second positions respectively;
Figure 3e is similar to figure 3a but showing resonators adjusted to different frequencies whereas figure 2a shows all resonators adjusted to the same frequency;
Figure 4a is a schematic perspective view of a vibration damping device according to a fourth embodiment of the invention;
Figures 4b and 4c are perspective views of an element of figure 4a, figure 4b showing a beam length adjustment mechanism in a disassembled position and figure 4c with a beam length adjustment mechanism in an assembled position;
Figure 5a is a schematic perspective view of a vibration damping device according a fifth embodiment of the invention;
Figures 5b and 5c are perspective views of an element of figure 5a, figure 5b showing an elastic beam of the element disassembled from a base of the element and figure 5c showing the elastic beam assembled to the base;
Figure 5d is similar to figure 5a but showing resonators adjusted to different frequencies whereas figure 5a shows all resonators adjusted to the same frequency;
Figure 6a is a schematic perspective view of a vibration damping device according to a sixth embodiment of the invention;
Figures 6b and 6c are perspective views of an element of figure 6a, figure 6b showing an elastic beam having a first length and figure 6c an elastic beam having a second length shorter than the first length being embedded in a resin;
Figure 6d is similar to figure 6a but showing a variant with resonators adjusted to different frequencies by being embedded in resin of different depths whereas figure 6a shows all resonators adjusted to the same frequency;
Figure 7a shows a schematic perspective view of a vibration damping device according to seventh embodiment of the invention;
Figures 7b and 7c are perspective views of elements of figure 7a showing first and second beam lengths;
Figure 7d is a top plan view of the element of figure 7c;
Figure 7e is perspective view of a tube implementing a vibration damping device according to the principles of figures 7a to 7d, for use for instance as a ventilation or exhaust duct of for other uses;
Figure 7f is a perspective view similar to figure 7b, of a variant;
Figure 8a is schematic perspective view of a vibration damping device according to an eighth embodiment of the invention;
Figure 8b is a perspective view of a portion of the device of figure 8a prior to bending;
Figures 8c and 8d are perspective views of an element of the portion of figure 8b adjusted for first and second frequencies respectively;
Figure 8e is a perspective view of a variant of figures 8c and 8d;
Figure 8f is a perspective view of a conduit on which a vibration damping device according to figure 8a is mounted, the conduit for instance for uses in ventilation, exhaust duct, or other fluid transport applications;
Figure 8g illustrates elements of a vibration damping device of figure 8a with different frequency adjustments obtained by removing selected connecting posts between the resonant beam and surrounding support;
Figure 9 is schematic perspective view of a vibration damping device according to a ninth embodiment of the invention employing a similar beam length adjustment to the embodiment of figures 8a-8e;
Figure 10a is a schematic perspective view and figure 10b a plan view of a vibration damping device according to a tenth embodiment of the invention;
Figure 10c is side view of figure 10a;
Figure 10d is a view similar to figure 10c of a variant
Figure 11a is a schematic perspective view of a unit vibration damping device according to yet another aspect of the invention with certain wall portions removed to better see the interior;
Figure 11b is a schematic perspective view of a variant of the unit vibration damping device of figure 11a;
Figure 11c is a side view with a side wall removed to see the interior of the variant of figure 11b;
Figure 11d is a schematic sectional view of a construction element according to an embodiment of the invention comprising a wall or panel portion containing a plurality of unit vibration damping devices of figure 11a;
Figure 11e is a schematic perspective partial sectional view of a construction element according to an embodiment of the invention comprising a wall or panel portion containing unit vibration damping devices of figure 11b;
Figure 12a is a schematic perspective view of a unit vibration damping device according to yet another aspect of the invention with a top wall portion removed to see the interior;
Figure 12b is a view similar to figure 12a of a variant;
Figure 13a is a schematic perspective view of a unit vibration damping device according to yet another embodiment of the invention with a wall portion cut away to better see the interior;
Figure 13b is a schematic perspective view in partial cross-section of a construction element according to an embodiment of the invention comprising a substrate containing unit vibration damping devices of figure 13a embedded in the substrate.

Referring to the figures, a vibration damping device 1 according to embodiments of the invention generally comprises a support structure 2 and a resonator arrangement 3 mounted on the support structure 2. The resonator arrangement 3 comprises a plurality of adjustable resonator elements 5, each adjustable resonator element 5 comprising an inertial oscillating mass 8 and an elastic element 9 interconnecting the inertial oscillating mass 8 to the support structure 2.

In the embodiments 1 to 9, the elastic element comprises an elastic beam 9a.

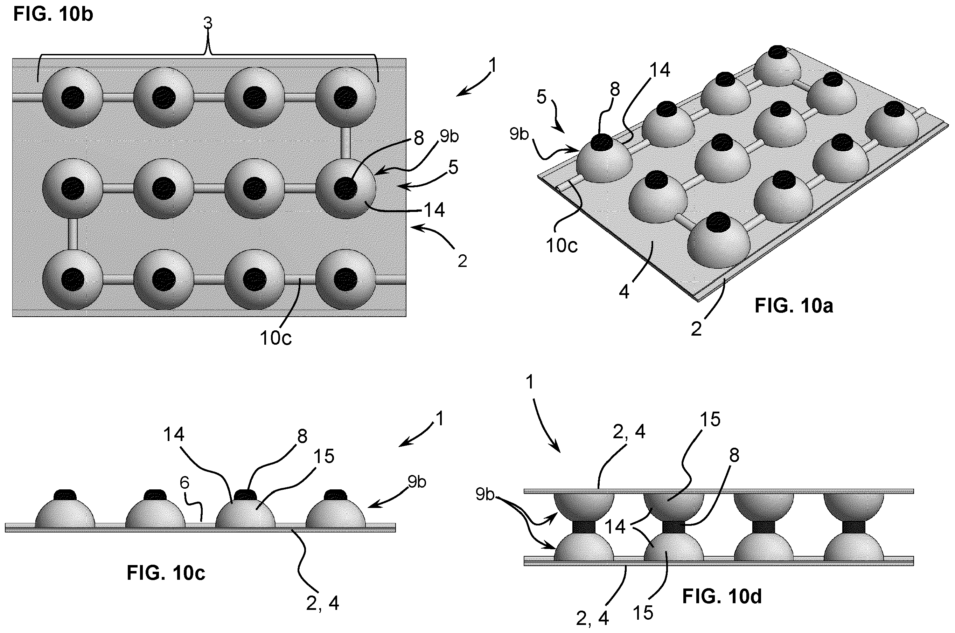

In the embodiment of figures 10a to 10d, the elastic element 9 comprises a gas filled capsule 9b having an elastic membrane 14 extending over a chamber 15 filled with gas.

The adjustable resonator element 5 further comprises a frequency adjustment mechanism.

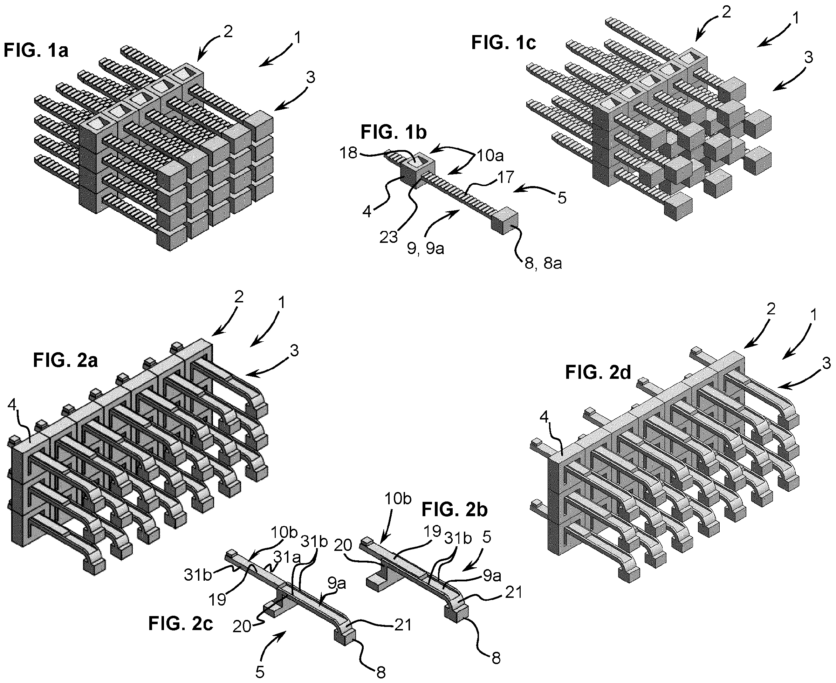

The frequency adjustment mechanisms in the embodiments 1 to 9 comprise an elastic beam 9a which may have different configurations. In the embodiments of figures 1a to 1c, 4a to 4c, 5a to 9, the frequency adjustment mechanism comprises a beam length adjustment mechanism 10a. In the embodiment of figures 2a to 2b, the frequency adjustment mechanism comprises a beam stiffness adjustment mechanism 10b.

In the embodiment of figures 10a to 10d, the frequency adjustment mechanism comprises a gas inlet and outlet 10c for injecting or removing a gas (typically air) in the chamber 15 covered by the elastic membrane 14.

For a fixed oscillator mass 8a as found in the embodiments of figures 1a to 2b, 4a to 10d, the variation of the beam length or the beam stiffness or the gas pressure in the capsule modifies the resonant frequency of the adjustable resonator element.

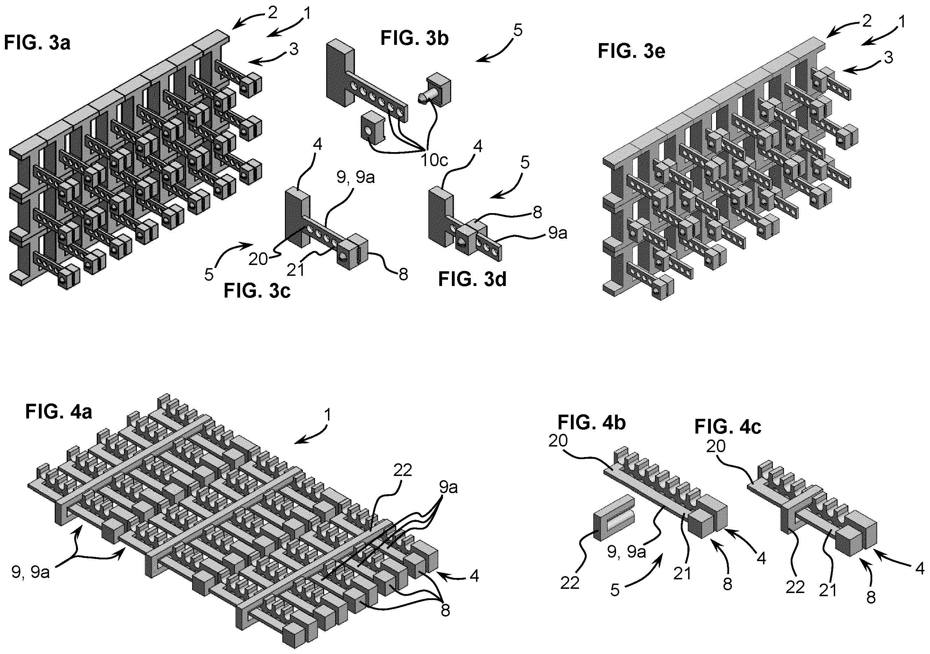

In the embodiment of figures 3a to 3e, the inertial oscillating mass comprises an adjustable oscillator mass 8b that may be adjustably mounted at different positions along the length of the elastic beam 9a thus changing the resonant frequency.

The adjustable oscillator mass 8b may also have masses with different magnitudes that can be fixed to the beam at a same position to change the frequency resonance, or can have different masses that may be fixed to the beam at different positions. In a preferred embodiment, the mass is of fixed size and magnitude and positionable at different positions along the length of the beam to reduce cost of manufacturing the components of the resonator.

In an embodiment (not shown), it is possible to provide a mass fixed to the elastic beam that has frangible portions between segments of the mass so that portions thereof can be removed to reduce the magnitude of the oscillating mass depending on the needs.

Referring now to the embodiment of figures 1a to 1c, the inertial oscillating mass 8 is a fixed oscillator mass 8a mounted at a free extremity of the elastic beam 9a, the elastic beam comprising a toothed surface 17 engaging a tongue 18 formed in a support element 4 of the support structure 2, the beam extending through a guide cavity extending through the support element 4 into which the tongue 18 projects. The tongue engages in the grooves between the teeth formed on the toothed surface 17 to block the position of the elastic beam relative to the support element. The tongue 18 may be configured to engage to the toothed surface 17 in such a manner that the length of the elastic beam may be adjusted in a ratchetting movement in both directions of shortening or lengthening the beam, or may allow displacement of the beam only in a single direction for instance either only lengthening the beam or either only shortening the beam. In the latter variant the vibration damping device is provided from production with the beams in initial positions that allow the full amplitude of desired movement to vary the length of the beam from the initial position to the final position.

The resonating frequency of the vibration damping device of figures 1a and 1b may thus be modified by adjusting the length of the elastic beam 9a with the ratchet mechanism 17, 18. It may be noted that a plurality of resonant frequencies may be adjusted in a single vibration damping device 1 by adjusting the length of the beams 9a according to one of a plurality of selected lengths. For instance, the beams may be adjusted with first and second lengths in an alternating manner as illustrated in figure 1c, or for instance in an alternating grouped manner e.g. groups of a plurality of adjustable resonating elements such as groups of four, groups of two, etc.

Referring to the embodiment illustrated in figures 2a to 2d, the frequency adjustment mechanism comprises a beam stiffness adjustment mechanism 10b. The elastic beam 9a is fixed at a base end 20 to the support element 4 of the support structure 2 and extends to a free end 21 where inertial oscillating mass 8 is fixed. In this embodiment, the beam 9a has a fixed non-adjustable length, however a second stiffening beam 19 is slidably engageable along the elastic beam 9a, for instance by having edges 31a received in opposed lateral grooves 31b on an upper or top surface (as shown) of the elastic beam. The stiffening beam 19 is slidable to varying degrees along elastic beam 9a from the base end 20 towards the free end 21 such that the stiffness of the elastic beam 9a is modified depending on the extent to which the stiffening beam 19 extends along and engages a portion of the elastic beam. The stiffening beam 19 is movably mounted with respect to the elastic beam 9a and may engage the elastic beam in side edges with a friction fit or there may be indents to provide some resistance yet positive positioning. In variants, there may be other clamping elements that fix the position of the stiffening beam 19 extending a certain portion of the length from the base 20 towards the free end 21 that determines the stiffness of the elastic beam and therefore the resonant frequency thereof. For instance, similarly to the embodiment of Fig 1b, the stiffening beam might be positioned by tongues placed on the lateral grooves that ratchet the stiffening beam 19 at specific distance (variant not shown).

As shown in figure 2a, the opposite end of the stiffening beam may be positioned on a side of the support structure 2 that is opposite the side of the support structure from which the elastic beam 9a projects. The stiffening beam 19 may be more rigid than the elastic beam 9a or may have a similar rigidity (elasticity) or even a lower rigidity, it being understood that in view of the thicker section along the portion where the stiffening beam and elastic beam overlap the overall rigidity is increased (i.e. the spring constant is increased).

Referring now to the embodiment of figures 3a to 3e, in this embodiment the elastic beam 9a extends fixedly from the support structure 2 and the inertial oscillating mass 8 is an adjustable oscillating mass whose positioning can be adjusted at various positions along the length of the elastic beam 9a. In the illustrated embodiment, the adjustable oscillator mass 8 comprises two portions with a fixing pin on one portion that inserts through a hole in the beam 9a and engages in a complementary fixing hole in the other portion of the mass to clamp the mass 8 to the elastic beam. The elastic beam has a plurality of positioning elements such as holes at different positions along the length of the beam between the base and free end such that the mass can be positioned at different lengths from the free end. In variants, other positioning elements, fixing means and mass configurations may however be provided, such as an oscillating mass in a single piece with a slot that clips over the beam, which may be provided with holes, grooves or other elements engaging a complementary fixing element of the position adjustable mass.

As the mass 8 approaches the base end 20 position, the resonant frequency increases in view of the shorter beam length between the mass and the support structure 2. It is also possible in this embodiment to have masses that adjustably couple to the beams that may be of different densities or of different sizes to increase or decrease the magnitude of the oscillating mass.

An adjustable oscillating mass 8 may also be formed by providing an element that is of a single part but has frangible connections between sections thereof to allow easy breakaway of one or more sections to reduce the mass to the desired value. This allows the manufacturing of a single mass component, for instance by injection molding while allowing the magnitude of the mass to be easily adjusted post production by breaking away portions thereof.

Referring to the embodiment in figures 4a to 4c, in this embodiment the elastic beam 9a extends parallel and adjacent to a support 4 in the form of a beam provided with a teeth that allow a clamping fork 22 to engage in one of the teeth and block the elastic beam along a portion thereof situated between the base end 20 and free end 21 where the inertial oscillating mass 8 is fixedly positioned. In this embodiment, the elastic beam 9a has a fixed length, however the oscillating portion of the elastic beam is modified by the position of the clamping fork 22. As is obvious, as the clamping fork is positioned closer to the free end with the inertial oscillating mass 8, the effective oscillating length of the beam reduces and thus the resonant frequency increases.

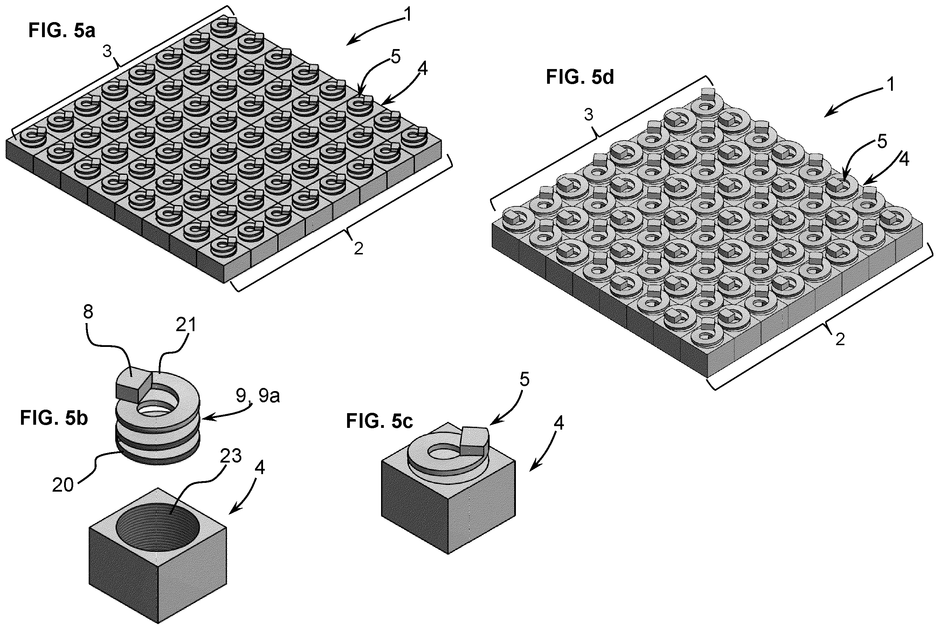

Referring to the embodiment of figures 5a to 5d, in this embodiment the support structure comprises cavities 23 and the elastic beam 9a comprises a spiral (circular winding) shape with the inertial oscillating mass 8 being mounted fixedly on a free end 21 of the elastic beam. The other base end 20 of the elastic beam is insertable into the cavity 23 at an adjustable varying depth such that the length of the spiral elastic beam positioned above the cavity 23 is varied. In the illustrated embodiment, the elastic beam 9a may comprise a threaded outer surface that engages in a complementary screw thread surface of the cavity so as to allow the elastic beam to be screwed at a chosen depth within the cavity 23. Instead of a screw thread, the outer circumferential surface of the spiral shaped elastic beam 9a may comprise protuberances, ridges, and other elements that engage in a complementary manner in an interference fit with the edge of the cavity so as to securely fix the portion of elastic beam inserted within the cavity 23. The oscillating length of the elastic beam 9a and thus the resonant frequency is thus varied by varying the depth of insertion of the base end 20 of the beam within the cavity 23. The support structure 2 as in the other embodiments may be formed of a single integral support structure with a plurality of cavities 23 or be made of a series of blocks that are fixed, bonded or otherwise connected together to form the vibration damping device 1.

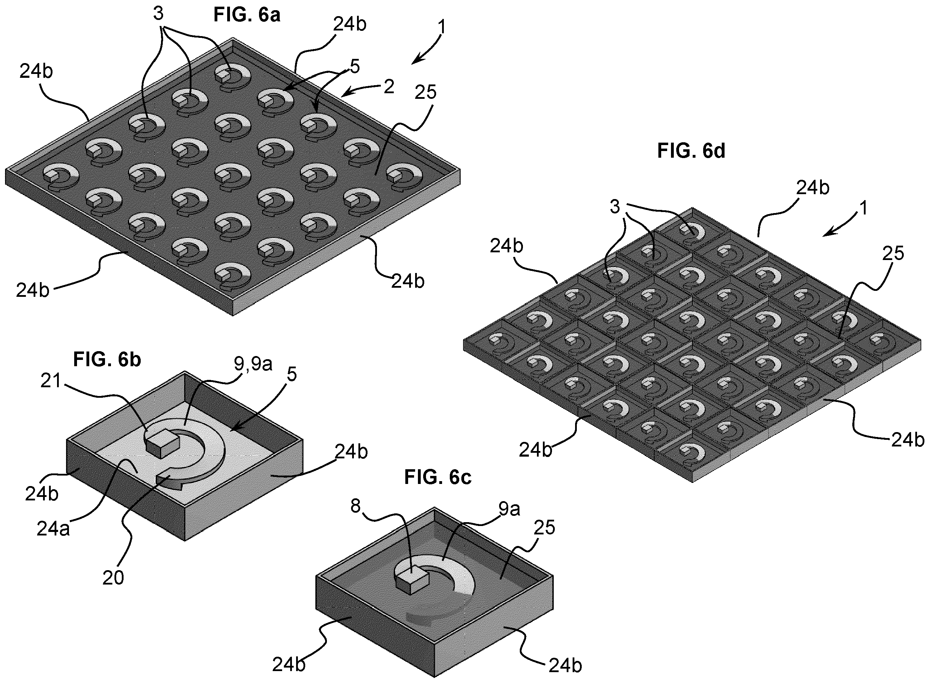

Referring now to the embodiment of figures 6a to 6d, in this embodiment the elastic beam 9a is also in the form of a spiral shaped beam, but could also have various other shapes, and is connected at its base end 20 to a bottom wall 24a of the support structure 2. The free end 21 of the elastic beam comprises the inertial oscillating mass 8 fixedly attached thereto at a certain height above the bottom wall 24a. The effective oscillating length of the beam may be varied by pouring or injecting a filling material 25 up to a selected adjustable height above the bottom wall 24a. A plurality of elastic elements 9 may be mounted on a base wall 24 and surrounded by a perimeter wall 24b that allows a filling material to be poured on the bottom wall and contained within the perimeter walls up to a certain height. It is also possible in such an embodiment for each individual elastic beam 9a to be positioned in its own compartment surrounded by a perimeter wall 24b or to have a certain number of elastic beams to be surrounded by a common perimeter wall 24a. In the latter embodiments, it would thus be possible to different compartments with resin at different heights in order to vary the resonant frequency of elastic elements 9 in different compartments, such that the vibration damping device 1 has a plurality of frequency damping ranges. The resin 25 may be a thermoplastic multi-component resin or may be a potting resin such as an elastomeric silicon-based resin.

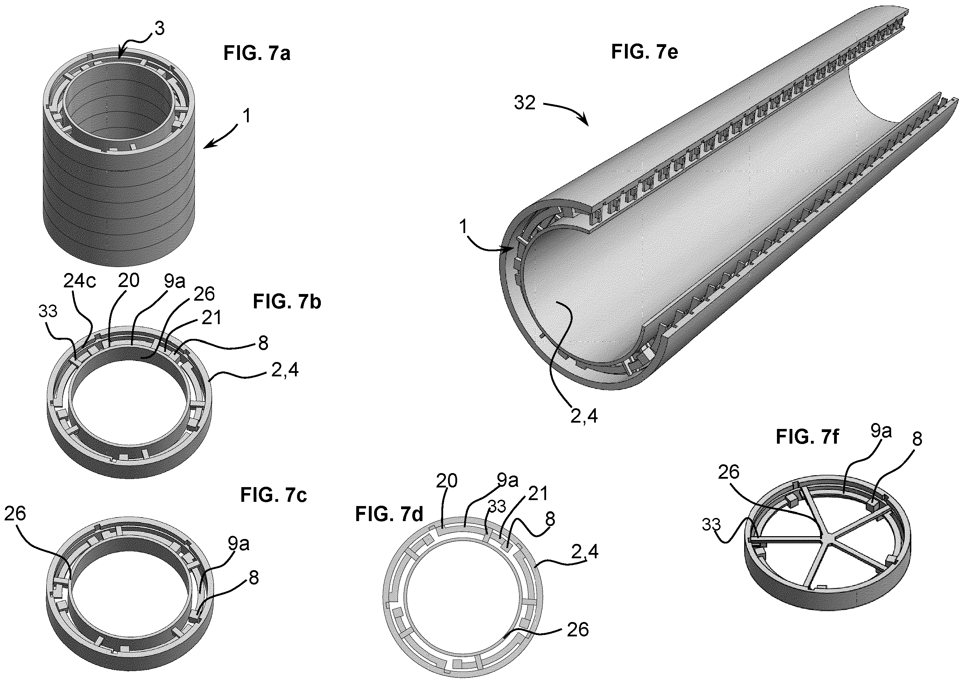

Referring now to the embodiment of figures 7a to 7e, in this embodiment the support structure 2 may be in the form of a generally axisymmetric structure, for instance a generally cylindrical structure, where the elastic beams 9a are connected to a curved (e.g. cylindrical) wall 24c of the support structure 2, 4 at their base end 20, and extending therefrom in a curved manner substantially along the wall 24c to a free end 21 on which the inertial oscillating mass 8 is fixedly mounted. The resonating length of the elastic beam 9a may be adjusted by a rotating actuator 26 that engages the beam at portion of its length. As the actuator 26 rotates, a beam engagement arm 33 thereof moves the along the beam from the base end in the direction of the free end. The beam engagement arm 33 presses against or clamps the beam 9a such that it has the effect of changing the oscillating length of the beam 9a depending on the position of the arm 26 along the beam 9a, thus adjusting the resonant frequency. It may be noted that within an axisymmetric structure there may be a plurality of elastic beams arranged around the circumference such that a plurality of beams are engaged by the arms 33 of the rotating actuator 26. The beams may have equivalent lengths or may be of one, two or more different lengths so that one, two or more resonant frequencies are present in the resonator arrangement 3.

As illustrated in figure 7e, the inner surface of the actuator element may form a conduit 32 for gas or liquids, for instance for exhaust or ventilation pipes to reduce the sound, noise produced by a source of noise which could for instance be of a ventilator fan, a combustion engine, a burner or other noise producing activities.

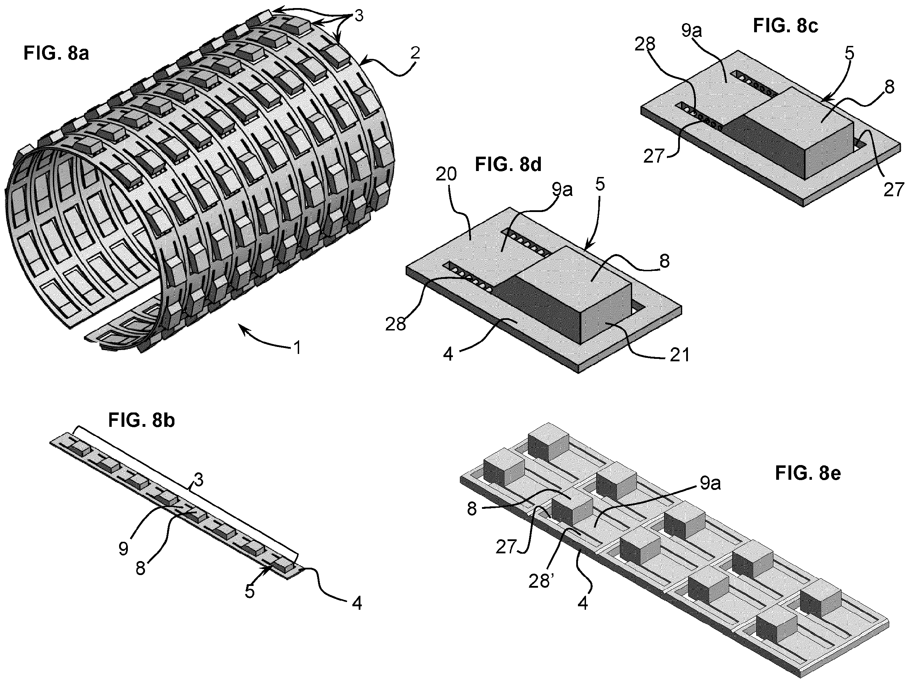

Referring now to the embodiment of figures 8a to 8d, in this embodiment the elastic beams 9a extend integrally from a support element 4 of a support structure 2 that may have a substantially flat shape in its initial configuration and that may be bent, for instance into a cylindrical configuration as shown in figures 8a and figure 8d around a tube or other element. The elastic elements 5 of this embodiment may however be mounted on support structures with various non-planar shapes and configurations using the principles of this embodiment. The inertial oscillating mass 8 is a fixed oscillator mass 8 mounted at free end 21 of the elastic beam 9a, the elastic beam being integrally formed with the surrounding support structure 2, 4 which is essentially in the same plane. The support 4 immediately surrounding the beam and mass 8, 9a is separated therefrom by a gap 27. From the base end 20 towards the free end 21, the elastic beam 9a is connected with frangible lugs or posts 28 that can be easily cut away in order to increase the oscillating length of the elastic beam 9a. Along the portion of the beam where the lugs or posts integrally connect the beam to the surrounding support 4, the beam cannot oscillate therefore reducing the length of the oscillating portion of the beam compared to the total length of the beam. In order to decrease the resonant frequency, the posts may be severed successively in a direction from the free end towards the base end 20 depending on the desired resonant frequency. In this embodiment, since the beams 9a may be integrally formed in the plane of the surrounding support structure 2, 4, the vibration damping device may be formed for instance in a molding process (e.g. an injection molding process), or in a stamping process, or in another manufacturing process, from a planar sheet of material or substantially planar sheet of material. In all of the afore mentioned embodiments, additive manufacturing processes may also be utilized such as 3D printing.

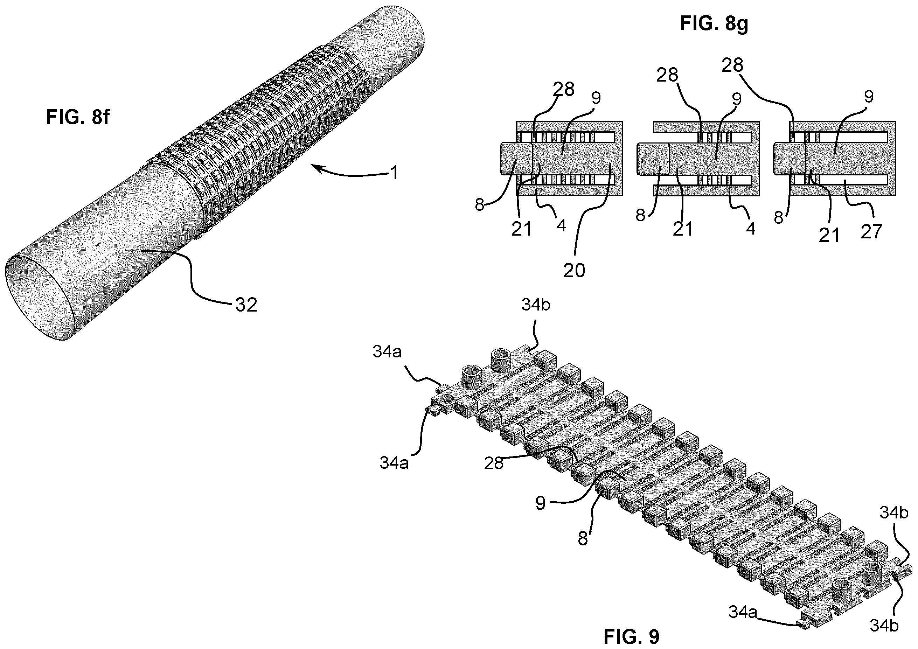

In variants, the posts 28 may have a certain elasticity such that they allow the beam 9 and inertial mass 8 to oscillate even when unsevered, whereby the resonant frequency of the element may be adjusted by severing various posts at different positions, for instance as illustrated in the examples figure 8g. In other words, due to low stiffness of a post 28, certain posts can be also severed closer to the base end 20 leaving the other posts closer to the free end 21 unsevered. This allows obtaining various resonance frequencies.

In this embodiment, a particularly cost effective vibration damping device may thus be produced and it can be easily adjusted by severing more or less connecting posts 28 according to the desired elastic length of the beams and therefore the desired resonant frequencies.

In a variant as illustrated in figure 8e, instead of posts, the beam 9a may be fixed to the surrounding support 4 by a frangible or severable thin web 28' that may be easily cut by various means such as a cutting tool, a laser cutter, or other cutting means to adjust the beam length and thus resonance frequency after production of the sheet as needed for the intended application.

The example illustrated in figure 8a shows the vibration damping device as a substantially cylindrical structure which could be formed from a flat sheet and subsequently bent into a cylindrical shape or could be directly formed into a cylindrical or other shape in a manufacturing process.

The application shown in figure 8f shows the vibration damping device formed around the outside of a conduit that, as discussed above, could be a ventilation, exhaust or other form of conduit.

The sheets or strips may also be provided with coupling lugs 34a and complementary coupling key slots 34b into which the coupling lugs can lock, for instance as illustrated in figure 9, such that the sheets or strips form modules that can be assembled and locked together to form larger sheets of various dimensions.

Referring to the embodiment of figures 10a to 10c, in this embodiment the elastic element 10c is formed by a gas filled capsule 10c comprising elastic membrane 14 that covers a gas chamber 15 therein. The elastic membrane 14 extends from a base 6 of the support structure 2 that may be a substantially flexible support structure, or conversely a substantially rigid support structure. The elastic membrane is made of material with elastic properties, such as an elastomer, and an inertial oscillating mass 8 is mounted on an outer portion of the membrane spaced apart from the base 6. The compressed gas within the chamber 15 covered by the elastic membrane 14 thus acts as a spring support for the inertial oscillating mass 8. The chambers 15 are connected to a gas inlet and outlet 10c that is connected to a gas pressure source (not shown). The gas pressure source is configured to increase or decrease the pressure of the gas in the chambers 15 such that the gas filled capsule 9b has an adjustable elastic constant depending on the gas pressure.

The resonant frequencies of the gas filled capsule 9b and inertial oscillating mass 8 may thus be modified by changing the gas pressure therein.

A plurality of gas filled capsules 9b may be connected to a same gas pressure source, whereby it is possible to have different subsets of gas filled capsules connected to two or more different gas pressure sources in order to have more than one resonant frequency of the adjustable resonator elements 5.

As illustrated in figure 10d, it is possible to have a pair of support structures 2,4 supporting gas filled capsules facing each other coupled to inertial oscillating masses 8 that are common to a pair of opposing gas filled capsules 9b.

The gas filled capsules may provide an actively variable damping device by changing the gas pressure in the gas chamber 15 covered by the elastic membrane 14, whereby the gas pressure may be changed if the inlet / outlet 10c is connected to a controllable variable gas pressure source.

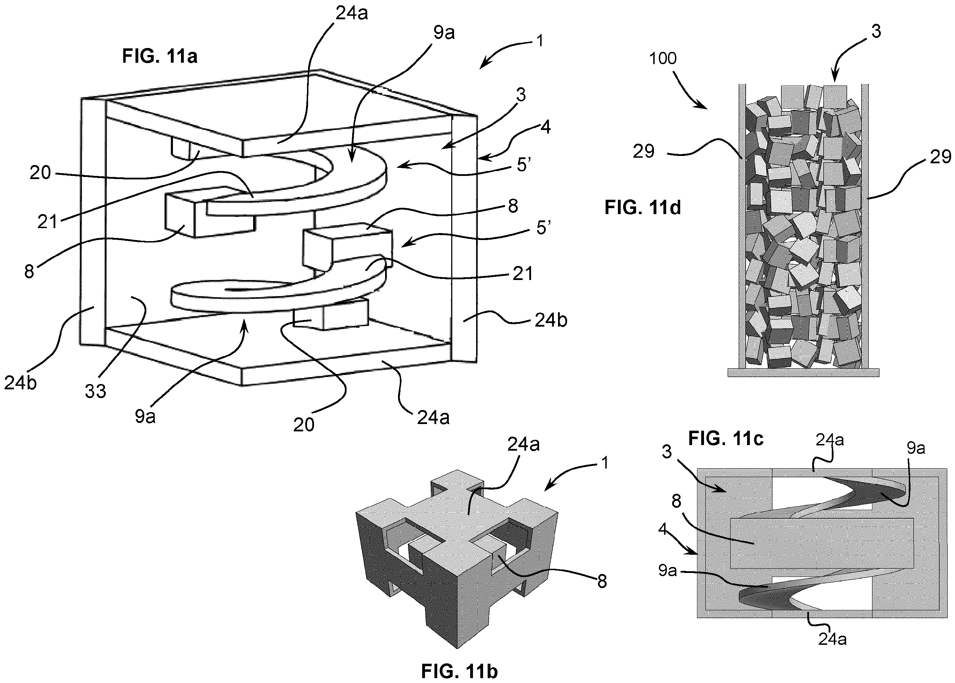

Referring now to the embodiments illustrated in figures 11a to 13b, another aspect of the invention is illustrated in which the devices are unitary vibration damping devices 1 comprising support elements 4 in the form of containers that surround or encapsulate a resonator arrangement 3 therein. The individual unitary vibration damping devices are for integration in a construction element. The construction element may be a panel for a building structure such as a roof, door, wall, floor, ventilation shaft or other building elements, or a panel for an enclosure such as an enclosure for a machine, a motor, or noise producing apparatuses. The construction element may be construction material such as concrete or plaster in which the individual unitary vibration damping devices are integrated. Other construction elements and materials may contain the individual unitary vibration damping devices according to embodiments of the invention in order to dampen mechanical and acoustic vibrations.

Referring to the embodiment illustrated in figure 5a, the resonator arrangement may comprise for instance a pair of resonator elements 5' each comprising an inertial oscillating mass 8 for instance fixed to a free end of an elastic beam 9a, the base ends 20 of the elastic beams being connected to the opposed support walls 24a of the resonator arrangement 3. The resonator arrangement is thus in the form of capsules that can be inserted loosely, or within a binding or setting material such as concrete or other materials, to dampen vibrations within the structure in which they are embedded or loosely mounted.

In the variant of figures 11b and 11c, the inertial mass 8 is coupled to a pair of opposed beams 9a connected to a pair of opposed walls 24a of the support 4. The support 4 may be formed with a closed container within which the resonator arrangement is mounted, or by a container with orifices, for instance as illustrated in figure 11b and 11c.

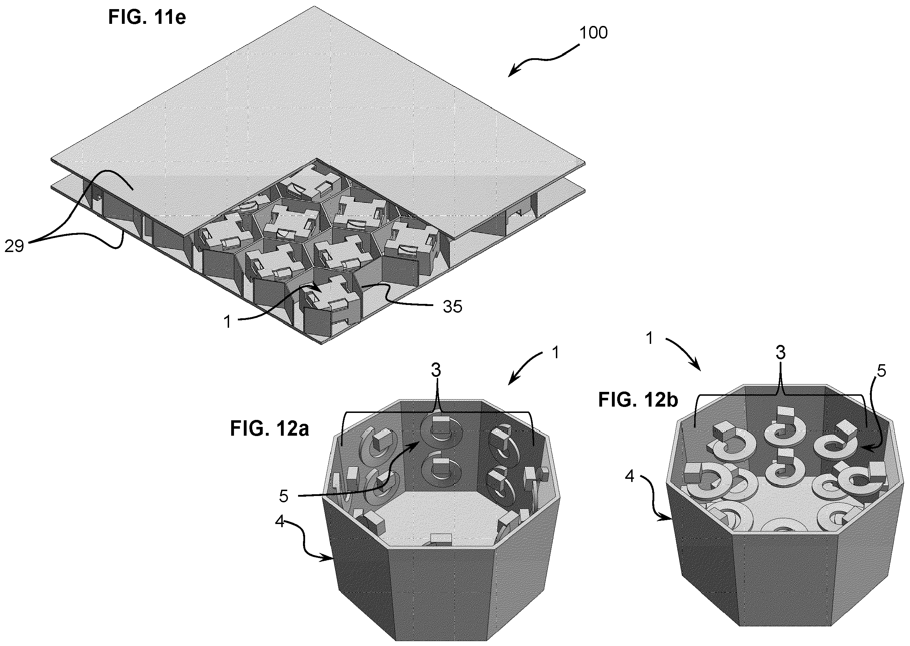

In the variants of figures 12a and 12b, the resonator arrangement 3 position within the support 4 forming a capsule or surrounding structure, may comprise a plurality of resonator elements 5 extending from different wall portions of the encapsulating support 4.

In the exemplary embodiment illustrated in figure 11d, the individual unitary vibration damping devices 1 are inserted loosely with between two spaced apart panels 29, or as shown in figure 11e, arranged in an orderly manner, for instance in cells 35 (e.g. honeycomb shaped cells) between panels 29. Acoustic and other vibrations are thus dampened as they pass through the structure between the spaced apart outer panels 29.

Unitary vibration damping devices 1 with resonator arrangements 3 in a container unit as exemplified in figure 11a, 12a and 12b may be embedded in various construction materials (e.g. plaster, concrete, resins and various other building materials, and loose substrates) to provide dampening within the material.

The plurality of unitary vibration damping devices 1 with resonator arrangements 3 in a container unit forming the support 4 may be provided with identical or different resonator frequencies and be mixed together within a structure or arranged in different positions at locations where different resonant frequencies are optimal for damping.

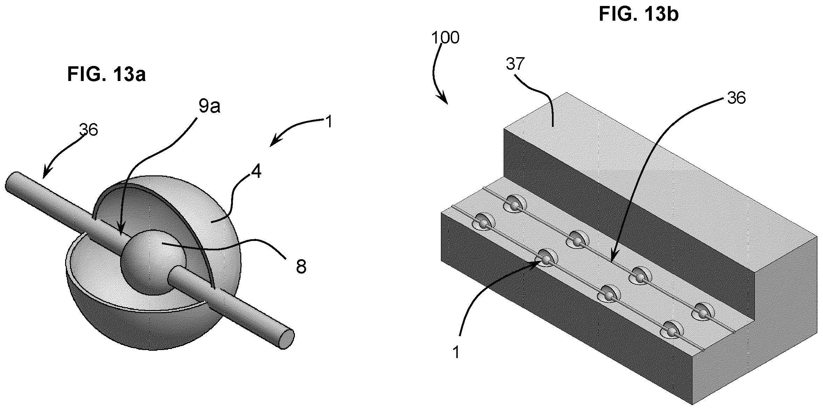

Another embodiment of individual unitary vibration damping devices 1 for installation in a binding material such as concrete is illustrated in figures 13a and 13b. In this embodiment, the inertial mass is mounted on a rod or rebar 36 that forms a beam 9a anchored at opposed ends of the container support 4, the inertial mass 8 being fixed on the rod, for instance in the middle of the container between beam ends. The inertial mass is thus suspended and can vibrate due to the elasticity of the rod. The container support may for instance be a hollow metal capsule of a spherical shape as shown or of a cubic or other shapes. The inertial mass and container support 4 may be welded, crimped, clamped or fixed by various means to the rod or rebar. The assembled rebar with unitary vibration damping devices 1 mounted there along at a predefined spacing may thus serve as reinforcement for the substrate as well as confer vibration damping properties to the construction element.

Embodiments of the invention provide various advantages that include any or more of the following:
1. Independence from the material type used - allows to implement the technology on materials that are inaccessible to traditional acoustic solutions, such as transparency or non-flammability.
2. The openness of the structure allows gas exchange with the environment - by arranging resonators on the channel/ventilation duct surface, one can achieve a damping effect without limiting the flow of gases or fluids in the channel itself.
3. Tuning the damping frequency to the noise source - increases attenuation level of noise and vibrations generated by the source compared to typical acoustic solutions.
4. Adjusting the frequency band of sound attenuation - the ability to adjust the target frequency at the stage of assembly / post-production for which the sound attenuation occurs. This makes it possible to create one universal solution that reduces production costs by eliminating the need to produce different systems operating for different frequency bands.
5. Efficiency at low frequencies - allows reduction of noise emitted by industrial machines such as engines for which traditional acoustic technologies are not very effective since they do not perform well at low frequencies
6. Lightweight design with compact size - this feature provides a significant advantage over space-consuming, heavy systems for low-frequency acoustic and mechanical vibrations suppression. It allows the solution to be applied in places where traditional acoustic materials cannot be applied due to insufficient space or weight restrictions.
7. The ability to form any shape - allows to match the acoustic material to the sound source, e.g. in household appliances housings.
8. Operation based on the acoustic wave energy attenuation - currently used materials reflect, transmit or scatter acoustic waves. The dissipation of acoustic wave energy allows the material to be used in situations where the sound source is not clearly isolated from the recipient by acoustic material.

### List of features

Vibration damping device 1, Unitary vibration damping device 101
**Support structure 2**
   **Support element 4**
   **Base 6**
      Gas channels 16
   Resonator element fixing portion
      cavity 23
      bottom wall 24a
      perimeter wall 24b
      inner surface 24c
      Gap 27
**Resonator arrangement 3**
   **Adjustable resonator element 5**
   **Inertial oscillating mass 8**
      Fixed oscillator mass
      Adjustable oscillator mass
         Mass position adjustment mechanism 11
         Mass magnitude adjustment 12
            Frangible sections 13
   **Elastic element 9**
      **Elastic beam 9a**
         Base end 20
         Free end 21
         Lateral guide edges 31b
      **Gas filled capsule 9b**
         Elastic membrane 14
         Chamber 15
   **Frequency adjustment mechanism 10**
      Beam length adjustment mechanism 10a
         Ratchet
         Screw
         Clamp
         Fork
         Rotating actuator 26
            Clamping arm 33
         Frangible/severable fixing posts 28
         Frangible/severable fixing web 28'
         Resin 25
      Beam stiffness adjustment mechanism 10b
         Stiffening beam 19
         Edges 31a
      Gas pressure adjustment mechanism 10c
      Inertial mass position or magnitude adjustment mechanism
      Gas pressure source
**Construction element 100**
   Panels 29
      Cell 35
   Mounting structure
      Ventilation conduit 32
      Wall
      roof
      Panel 29
   Substrate (e.g. concrete) 37
      Rod, Rebar 36

## Claims

1. Vibration damping device (1) for damping acoustic and mechanical vibrations, comprising a support structure (2) and a resonator arrangement (3) coupled to the support structure (2), the resonator arrangement comprising a plurality of resonator elements (5), each including an elastic element (9, 9a, 9b) and an inertial oscillating mass (8) coupled to the elastic element, **characterized in that** the resonator arrangement further comprises a frequency adjustment mechanism (10a, 10b, 10c) for each resonator element configured to adjust the resonant frequency of said each resonator element.

2. Vibration damping device according to the preceding claim wherein the elastic element comprises an elastic beam (9a) extending between a base end (20) coupled to the support structure (2) and the inertial oscillating mass (8).

3. Vibration damping device according to the preceding claim wherein the frequency adjustment mechanism comprises a beam length adjustment mechanism (10a) configured to adjust a resonating length of the elastic beam (9a).

4. Vibration damping device according to the preceding claim wherein the beam length adjustment mechanism (10a) comprises an actuator such as a fork (22) or arm (26) adjustably engaging the elastic beam at a position situated between the base end and the inertial mass to adjust the length of the beam between the actuation element and the inertial mass.

5. Vibration damping device according to claim 3 wherein the frequency adjustment mechanism comprises a cavity (23) within which a base portion of the elastic beam is inserted to shorten the oscillating length of the free portion of elastic beam to the inertial mass.

6. Vibration damping device according to the preceding claim wherein the elastic beam is held in the cavity by a screw thread, a ratchet mechanism, an interference fit or a clamping mechanism.

7. Vibration damping device according to claim 3 wherein the elastic beam is mounted at a base end (20) to a wall (24a) and upstands therefrom to the inertial oscillating mass at a free end (21) of the beam, the base wall surrounded by a peripheral wall (28) upstanding therefrom in direction of the beam fillable with a resin or other potting material (25) at an adjustable height configured to adjust the oscillating length of the elastic beam.

8. Vibration damping device according to the preceding claim wherein said plurality of resonator elements are arranged in a plurality of subsets comprising or more said resonator elements, each subset surrounded by one said peripheral wall fillable with said resin or other potting material.

9. Vibration damping device according to any preceding claim 2-7 wherein the elastic beam comprises a spiral form.

10. Vibration damping device according to claim 3 wherein the elastic beam (9a) is integrally formed with the surrounding support (4) of the support structure and extends to a free end (21) comprising the inertial oscillating mass (8), a gap (27) being formed around the beam (9a) separating it from the surrounding support.

11. Vibration damping device according to the preceding claim, wherein discrete bridging posts (28) or thin web (28') are connected across the gap along the length of the beam from the base end towards the inertial oscillating mass, the bridging posts or thin web being severable to adjust an oscillating length of the elastic beam, said oscillating length formed by a portion of the elastic beam free from bridging posts or thin web to the inertial oscillating mass.

12. Vibration damping device according to any of the two directly preceding claims wherein the support structure, elastic beam and inertial oscillating mass are integrally formed in a molding or stamping process.

13. Vibration damping device according to any of the three directly preceding claims wherein the support structure is provided in the form of a substantially planar thin bendable film.

14. Vibration damping device according to claim 1 wherein the elastic element comprises a gas filled capsule (9b) comprising an elastic membrane (14) covering a gas filled chamber (15), the inertial oscillating mass (8) mounted on the elastic membrane separated from the support structure (2) to which the elastic membrane is hermetically fixed, the frequency adjustment mechanism (10) comprising a gas inlet and outlet (10c) connected to a gas pressure source allowing a pressure in the chamber (15) to be varied to adjust the resonant frequency of the elastic element (9b).

15. Vibration damping device according to any preceding claim wherein the resonator arrangement comprises two or more sets of said resonator elements adjusted to at least two or more resonant frequencies.
